(19) Europäisches Patentamt / European Patent Office / Office européen des brevets

(11) **EP 2 864 672 B1**

(12) **EUROPEAN PATENT SPECIFICATION**

(45) Date of publication and mention
of the grant of the patent:
**01.08.2018 Bulletin 2018/31**

(21) Application number: **13809546.8**

(22) Date of filing: **06.06.2013**

(51) Int Cl.:
*F16H 35/10* *(2006.01)*     *F16D 43/20* *(2006.01)*
*F16D 7/02* *(2006.01)*

(86) International application number:
**PCT/US2013/044416**

(87) International publication number:
**WO 2014/004015 (03.01.2014 Gazette 2014/01)**

(54) **AUTOMATIC RESETTING TORQUE LIMITER CAPABLE OF HIGH SPEED CONTINUOUS OPERATION IN RELEASED MODE**

AUTOMATISCHE ZURÜCKSTELLUNG EINES DREHMOMENTBEGRENZERS FÜR KONTINUIERLICHEN HOCHGESCHWINDIGKEITSBETRIEB IN EINEM FREIGEGEBENEN MODUS

DISPOSITIF DE LIMITATION DE COUPLE À RÉINITIALISATION AUTOMATIQUE APTE À UN FONCTIONNEMENT EN CONTINU À HAUTE VITESSE DANS UN MODE LIBÉRÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.06.2012   US 201213531633**

(43) Date of publication of application:
**29.04.2015   Bulletin 2015/18**

(73) Proprietors:
• **Long, Thomas F.**
 **Wichita Falls, TX 76301 (US)**
• **Rudolph, Mark Wayne**
 **Wichita Falls, TX 76308 (US)**

(72) Inventors:
• **Long, Thomas F.**
 **Wichita Falls, TX 76301 (US)**
• **Rudolph, Mark Wayne**
 **Wichita Falls, TX 76308 (US)**

(74) Representative: **Schaumburg und Partner
Patentanwälte mbB
Postfach 86 07 48
81634 München (DE)**

(56) References cited:
GB-A- 2 265 191     JP-A- 2006 138 422
JP-A- 2008 008 438     US-A- 2 501 648
US-A- 4 271 944     US-A1- 2009 305 794

**Description**

The invention concerns an automatic resetting torque limiter capable of high speed continuous operation in released mode.

**BACKGROUND OF THE INVENTION**

This invention concerns automatically resetting torque limiting clutches, commonly referred to as limiters and more particularly automatically resetting torque limiters which can disconnect drive on overload.

Torque limiters are designed to release a driving connection when an excessive load is experienced. Such limiters are typically used in the context of a drive for various types of machinery subject to jams and other overloads in order to not damage the driving motor or the machinery. In most instances, the release of the torque limiter is noticed soon after it occurs since the machinery ceases to operate, and the need to reset the torque limiter input becomes apparent.

Automatic resetting torque limiting clutches have been in existence for many years, typically of a friction clutch or ball detent type. The friction type will release or slip at a preset overload torque value, and will reengage when the overload is removed. The disadvantage of this arrangement is that repeated heating of the torque limiter friction linings (as heat is generated by the slipping) causes the clutch capacity to fade, as the higher lining temperatures reduces the coefficient of friction, until the torque limiter slips continuously and destroys itself.

Another long known torque limiter type is the ball-detent reset torque limiter, which uses spring forces to push balls into drill point cavities in the other member, with the geometry thereof establishing forces and angles to produce a retraction of said balls to create a release at a preset torque level. The torque limiter will reengage when the torque demand falls somewhere below the release torque. The disadvantage of this device is the sudden changes in the acceleration of the connected components, which produces stresses in the material which exceeds the elastic limits of the components when running, disengaged, or when reengaging, which in turn produces deformations which greatly reduce the torque limiter service life.

There have also been developed further refinement of such torque limiters in which smoothly curved engagement surfaces define the cavities in an attempt to reduce the stresses occasioned by engagement and reengagement.

In some torque limiter installations, relatively high speeds of the input is involved, commonly as high as motor speed, when there is no reduction gearing interposed between the motor and the input to the torque limiter lowering the rotational speed of the input. In those instances of high speed torque limiter release, the overrunning components would be subjected to severe shock loads as a result of being driven at these high rotational speeds, which can be of the order of 1800 rpm or greater.

This could cause deformation of the mating torque limiter components, leading to failure or to changes in the set and reset torque levels due to deformations of the follower elements or engagement surfaces.

These applications create severe demands in cases where access to the torque limiters is very difficult or impossible as when the machine is located in tight spaces such as in tunneling and mining operations. In these applications, a torque limiter will likely be operated in the disengaged mode for extended time periods, and complete failures or significant degrading of performance would be very undesirable and costly.

A satisfactory torque limiter for such high speed limited access applications has not yet been developed.

Those working in the torque limiter field and on resettable torque limiters of the type described have heretofore long recognized that the drive surfaces which act to interrupt the drive through the limiter by causing drive elements under excessively high loads to be moved to a released position should be smoothly curved to reduce shocks when engaging and disengaging these elements. See U.S. patent no. 2,501,648 for a discussion of these matters in the context of an automatically resetting torque limiter.

In the field of cams design in a machine where there is a particular designed for output motion there has long been recognition that simply smoothly curving these surfaces is not sufficient to avoid shocks and early failures.

However, in the field of automatic resetting torque limiters, it has not heretofore been recognized that simply smoothly curving the engagement surfaces which are engaged by drive elements is not sufficient to eliminate noise and impact wear of the engagement surfaces and elements when continuously operating in the released condition at high speeds, i.e. around 1800 rpm or higher. In fact, despite a long felt need for such a torque limiter, no automatically reset torque limiter has been produced which can operate successfully under those conditions.

US 2 501 648 A (OGDEN, JOHN G.) concerns the closest prior art and describes a clutch of slipping type adapted to be incorporated in a driving train of mechanism.

It is the object of the present invention to provide an automatically resettable torque limiter which is capable of operating in its released mode at high speeds for extended periods without damaging the mechanism such as to result in a failure or in a progressive change in the release and resetting torque levels.

It is a further object to provide such an automatically resetting torque limiter which is not excessively noisy when running in its released condition at high speeds.

## SUMMARY OF THE INVENTION

The above recited objects and other objects which will be understood upon a reading of the following specification and claims are achieved by providing a particular engagement surface curved shape which does not create large dynamic loads or stresses in the components which exceed the elastic limit of the elements even when operated at high speeds of 1800 rpm or greater such as to minimize shocks and resultant wear and noise during operation.

Such engagement surface curve is of a shape which does not produce discontinuities in the acceleration and jerk functions of the follow elements induced therefrom at any point during overrunning operation. Such engagement surface curve shape is preferably defined by a polynomial of at least fifth power and preferably a seventh power and most preferably an eighth power polynomial with other parameters producing the desired torque drive release value and designed for the particular installation of the resettable torque limiter.

## DESCRIPTION OF THE DRAWINGS

Figure 1 is a pictorial view of a torque limiter according to the present invention with an outer rotary member shown in phantom lines to reveal interior details.

Figure 2 is an enlarged fragmentary side view of a portion of the torque limiter shown in Figure 1.

Figure 3A is a pictorial view of the rotary member included in the torque limiter of Figure 1.

Figure 3B is a pictorial of a different embodiment of the rotary member shown in Figure 3A.

Figure 3C is a pictorial view of another embodiment of the rotary member shown in Figure 3A.

Figures 4A and 4B are diagrams of the force relationship between an external engagement surface and follower roller follower in normal operation in the released condition.

Figure 5 is a diagram of a pair of engagement elements comprised of two rollers urged into contact with a two lobed engagement surface on a drive rotor with a plot in broken lines of the level of acceleration of the follower elements occurring as the rotor rotates through one complete rotation.

Figure 6 is a plot of the shape of each of three forms of an engagement surface.

Figures 7A - 7C are respective plots of displacement, velocity, accelerations, and jerk produced by the three engagement surface shapes shown in Figure 6.

Figures 8A, 8B, 8C and 8D are plots of the displacement, velocity, acceleration and jerk of engagement elements produced by an eighth power polynomial defined engagement surface when the torque limiter engagement elements are traversed over the engagement surface.

## DETAILED DESCRIPTION

In the following detailed description, certain specific terminology will be employed for the sake of clarity and a particular embodiment described in accordance with the requirements of 35 USC 112, but it is to be understood that the same is not intended to be limiting and should not be so construed inasmuch as the invention is capable of taking many forms and variations within the scope of the appended claims.

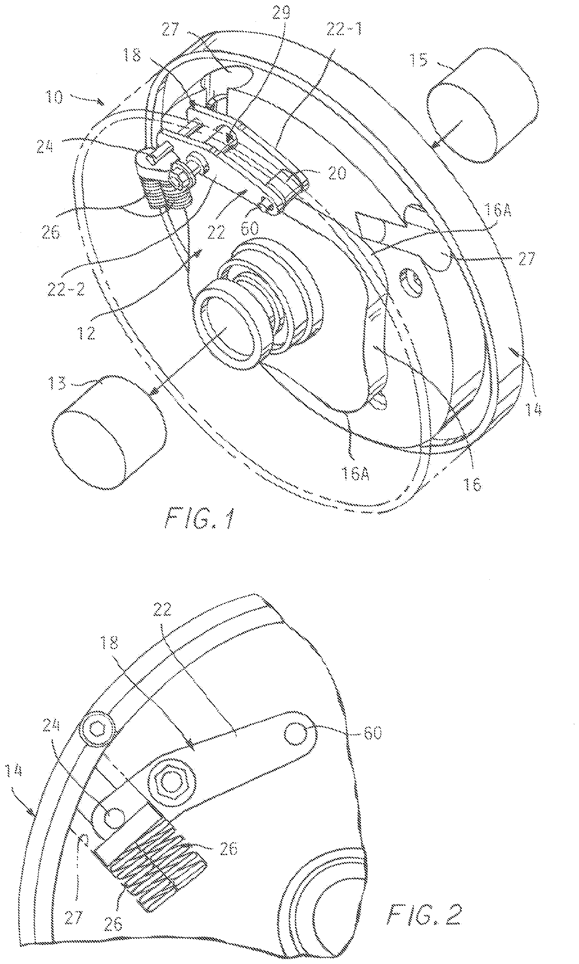

A torque limiter 10 which is automatically resettable is shown in Figure 1.

The automatically resetting torque limiter 10 includes two relatively rotatable rotary members 12, 14. One of the members (14 in Figure 1) is drivingly connected to a source of power 15 such as an electric motor, the other of the members (12 in Figure 1) is drivingly connected to driven machinery 13. One member 12 is formed with an engagement surface 16, which extends circumferentially about the axis of rotation of the member 12. The engagement surface 16 in this embodiment undulates to form one or more peak undulations or lobes 16A, the distance from the axis of rotation to points on the engagement surface 16 varying about the outer perimeter of the member 12 in the region of the lobes 16A.

The other rotary member 14 mounts one or more engagement elements, here comprised of rocker arm roller follower assemblies 18 including rolling engagement elements comprising rollers 20 spring urged into engagement with the engagement surface 16 with a radially inwardly directed force which increases as the engagement elements or rollers 20 move up a lobe 16A.

Rocker arm mounted follower rollers 20 are preferred over slidable contact elements such as shown in U.S. patent no. 2,501,648 as the rollers and the rocker arm mount therefore minimizes sliding contact and thereby reduces friction and the resultant heat buildup therefrom as the limiter continuously operates in a released mode for sustained periods.

As long as the torque level transmitted between the members 12, 14 is below a predetermined release torque, the spring force prevents the engagement rollers 20 from completely ascending the peaks defining undulations or lobes 16A since the spring force resisting movement of the rollers increases as the engagement rollers 20 move out radially in moving up the lobes 16A until the applied torque can no longer generate sufficient force to further displace the engagement rollers 20, and relative rotation is prevented so that the driving relationship between the members is maintained.

The rotary driving connection is between the engagement surface 16 and the engagement elements comprise of the roller assemblies 18, and there is thus only slight relative rotation therebetween as the rollers 20 partially ascend the lobes and the driving relationship between members 12 and 14 is maintained. The radially directed spring force will prevent movement of the engagement rollers 20 all the way up the lobe 16A, due to the increasing resistance preventing relative rotation until the torque reaches the preset torque limit.

The reaction force between the engagement rollers 20 and the engagement surface 16 produces a tangential component capable of transmitting a torque as long as the members 12, 14 do not rotate relative to each other. This relative rotation is prevented as long as the torque level generates a radial or axial component not sufficiently high to be able to move the follower elements 20 completely past the peak undulations or lobes 16A. That is, the torque must be high enough to develop a force component able to overcome the increasing force generated by the springs and force the engagement rollers 20 to move a sufficient radial distance in a direction away from the engagement surface 16 to clear the lobes 16A against the resistance of the component of the reaction to spring force acting on the engagement rollers 20 in opposition to the applied torque.

Once that preset torque limit is exceeded, the engagement rollers 20 will overcome the spring force and completely ascend and move past the respective lobes 16A of the engagement surface 16, and relative rotation between the members 12, 14 will commence and continue as long as the applied torque remains at or above that level. If the torque level declines below that predetermined level, drive is automatically re-established between the members 12, 14 as the engagement rollers 20 can no longer completely ascend the lobes 16A due to the resistance created by the spring forces.

The moving parts may be submerged in an oil bath, the oil held outward by centrifugal force, and heat from churning the oil when the torque limiter 10 is continuously running in a released mode is thereby dissipated to the air.

The rocker arm-roller assemblies 18 and lobes 16A may be variously configured and mounted as described in the published patent application US 2009-0305794 A.

The engagement surface 16 can be varied to accommodate additional roller assemblies as required to produce the required release torque level, with one lobe for each roller assembly 18. The engagement surface shape can also be varied to produce high torque attack, i.e., resistance to radial or axial movement of the follower rollers 20 can be made to increase rapidly when ascending the lobes 16A and a lower rate of torque decline when descending past the lobes 16A.

The engagement surface 16 can also be on the exterior perimeter of the rotary drive member 12 with the engagement element rollers 20 moving radially outwardly against inwardly directed spring forces to release as shown in Figure 1, or a surface can be formed on an internal surface, with the rollers 20 spring urged to move radially outwardly as described in U.S. 2009-0305794 A1.

The engagement surface can also be formed on an axial face of a drive member with the rollers 20 moved axially as described in U.S. 2009-0305794 A1.

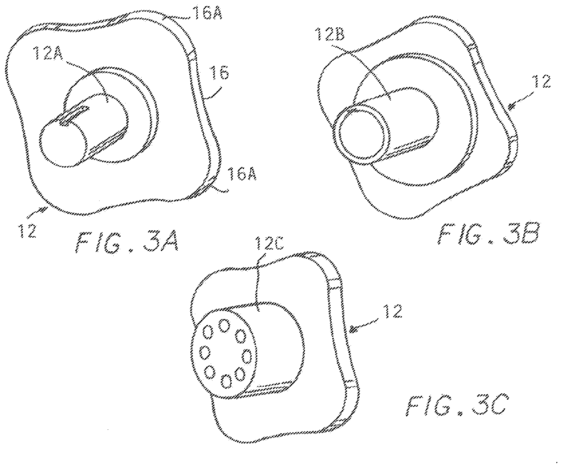

In the torque limiter 10 shown in Figures 1-3, one rotary drive member 12 comprises a rotor having a peripherally extending external engagement surface 16 as described above, and the rocker arm-roller assemblies 18 each include an engagement element comprised of a roller 20 mounted on one end of a rocker arm 22 formed by a pair of rocker arm plates 22-1, 22-2 pivotally mounted on the other rotary driven member 14 with pivot pin assemblies 29.

The other rotary member 14 is formed in an annular shape which encloses the rotary member 12. The other end of each of the pivoted rocker arms 22 mounts a cross pin 24 which acts to compress a pair of springs 26 disposed in spring seat cavities 27 formed in the member 14. The rocker arms 22 pivot up as the engagement rollers 20 are moved radially outwardly in ascending the lobes 16A but are unable to completely pass over the lobes 16A until the transmitted torque exceeds a predetermined level. Other arrangements are possible as described in published patent application U.S. No.2009-0305794 A1.

As described above, the displacement of the engagement rollers produced by the curve of the engagement surface 16 must produce smooth accelerations of the rollers 20 when ascending the lobes 16A, in order to avoid shocks when the torque limiter 10 is running released or when resetting.

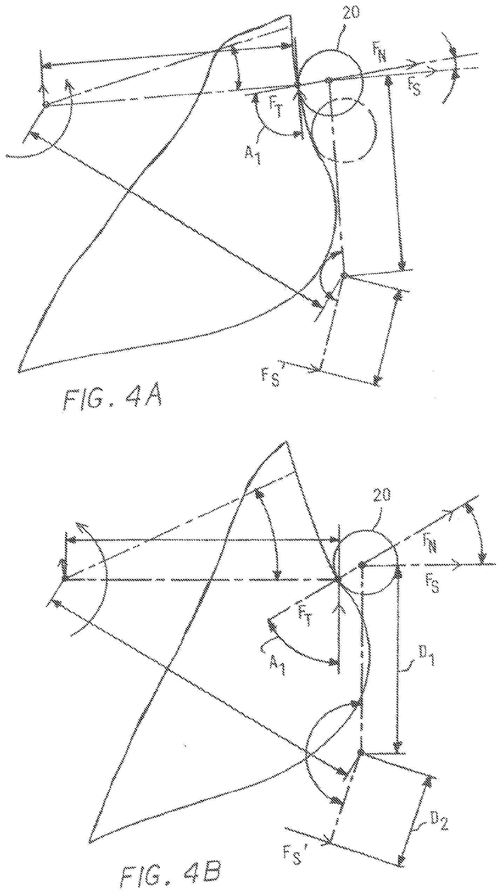

Figures 4A and 4B plot the forces generated in a driving condition transmitting torque below the preset limit (Figure 4A) and high torque exceeding the preset limit (Figure 4B). As torque is applied to the member 12, each engagement roller element begins to roll up a lobe 16A, increasingly compressing the spring through the rocker arm 22. The force of the spring ($F_S$) keeping the engagement element roller 20 in constant contact with the engagement surface 16 (through the rocker arm) causes a reaction force ($F_N$) normal to the cam surface. A component of ($F_N$) acting perpendicular to a radial line to the point of contact is shown as ($F_T$). The magnitude of ($F_T$) multiplied by the radial distance to the point of contact is the torque transmitted by the follower. The magnitude of ($F_T$) increases as the follower rollers rolls further up the lobes 16A due to the increased spring compression combined with the increased pressure angle between ($F_N$) and the radial line to the point of contact. As the magnitude of ($F_T$) increases and the radial distance between ($F_T$) and the axis of rotation increases, the transmitted torque increases until it equals the input torque. When a torque overload situation occurs and the engagement roller 20 rolls up and over the lobe 16A, the torque transmitted drops until the engagement element encounters the next lobe 16A on the engagement surface 16 in a continuously repeating cycle.

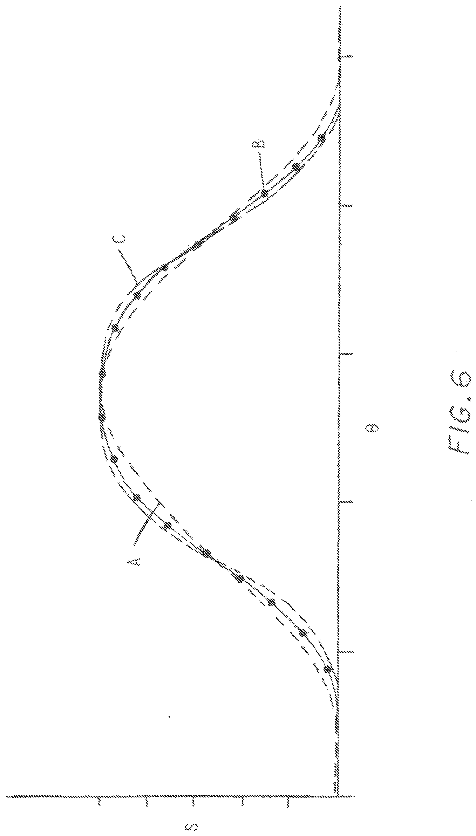

Figure 6 shows a plot of three typical smooth overlapping curves, displacement versus rotational angle, a simple harmonic curve A (broken line), a cycloidal curve B (solid line), and a seventh power polynomial curve C (partially broken line).

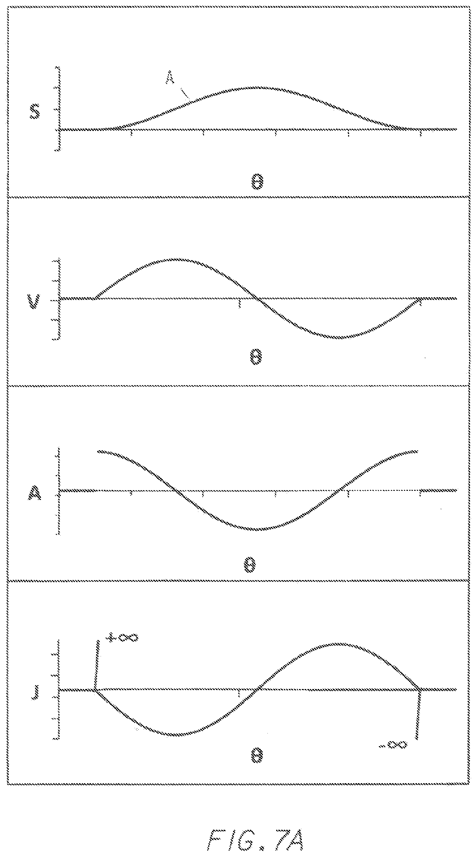

It should be noted that these are all smooth curves. However, Figure 7A which shows plot of the first three derivatives of displacement for the simple harmonic function corresponding to the curve reveals that the plots of acceleration A and jerk J evidence discontinuities which theoretically represent infinite values of acceleration. Corresponding accelerations and jerk would impose destructive loadings and excessive noise, and leading to progressively variable performance and perhaps early failure of a torque limiter using such a shape for an engagement surface. This is despite the gradual appearance of the gentle curved shape of an engagement surface according to a simple harmonic function.

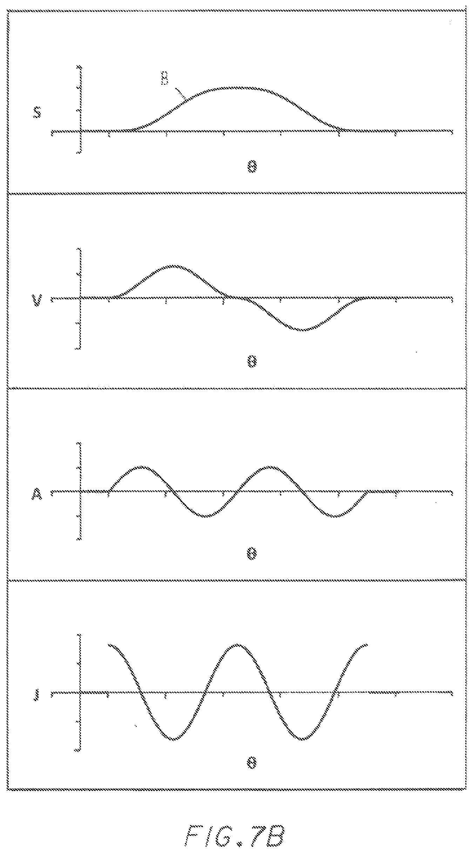

Figure 7B shows plots of the three derivatives of the cycloidal function plot, revealing such discontinuities in the jerk plot, which have it also been determined to create unacceptable loadings and noise.

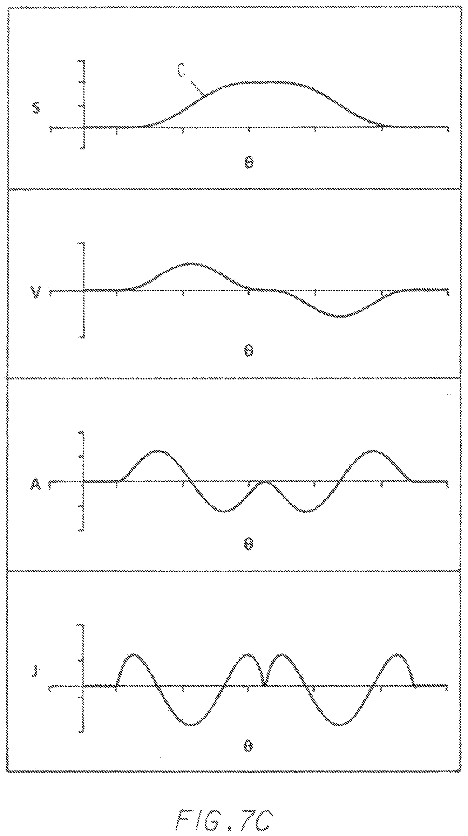

Figure 7C shows the plots of the derivatives of seventh power polynomial, revealing that no such discontinuities occur, and this shape would allow a torque limiter to operate continuously in a released mode at relatively high speed, i.e., on the order of 1500 - 1800 rpm, without damage or changing release and reset torque levels.

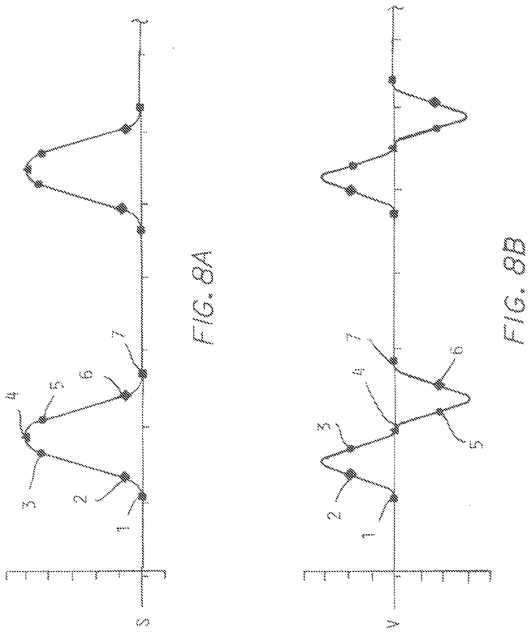

Figure 8A is a plot of displacement versus angular position, according to the eighth power polynomial equation:

$$S = {}^h[56\,(\theta/\beta)^5 - 140\,(\theta/\beta)^6 + 120(\theta/\beta)^7 - 35\,(\theta/\beta)^8]$$

The precise shape of curvature of the engagement surface is critical for a resettable torque limiter which is operated at relatively high speeds when in a released condition. While it has long been assumed by torque limiter designers that providing a smooth curvature of the engagement surface should suffice, resettable torque limiters have heretofore never been successfully able to operate at high speed in a released mode for extended periods.

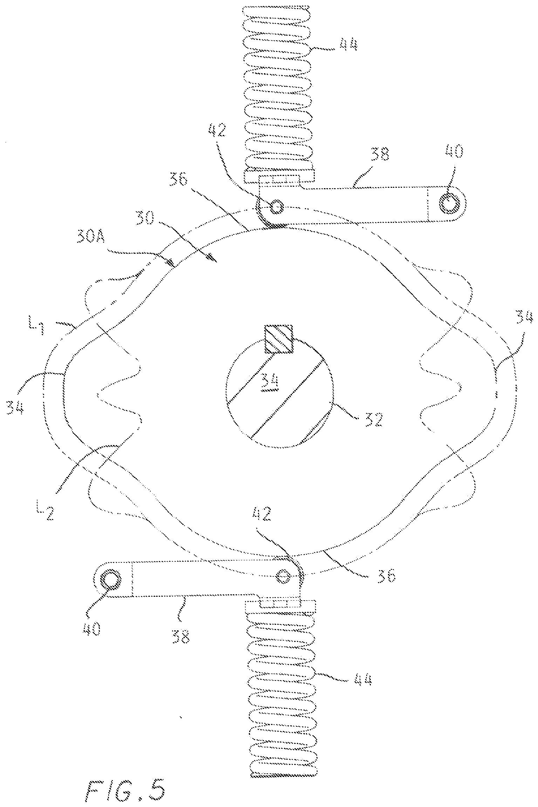

The reason is that simply providing a smooth curvature is not sufficient as there are dynamic effects which are not apparent. Referring to Figure 5, the engagement surface 30A of a rotary drive member 30 driven by an input shaft 32 has two oppositely located lobes or undulations 34 extending out from a constant diameter peripheral engagement surface 36.

A pair of rocker arms 38 pivotally mounted at 40 supported respective engagement elements comprised of rollers 42 urged into engagement with the engagement surface 36 by associated springs 44.

The path traced by broken line L-1 represents the displacement of the center line of the rollers 42 as the member 30 rotates, reflecting the smooth curvature of the engagement surface 36.

However, the radial acceleration of the rollers 42, represented by broken line L-2 shows that acceleration of the rollers 42 sharply varies as the rollers 42 are displaced by the engagement surface 30A of the drive member 30.

Smooth appearing curves can produce dynamic loading by the theoretical development of infinite or near infinite accelerations and/or jerk at transition points on the engagement surface curvature.

A curvature which avoid such discontinuities is shaped as a plot of a polynomial of at least 5th power, including the seventh power, but most preferred is the plot of the eighth power. Figure 8A shows a plot of such an eighth power polynomial curve.

The points 1-7 correspond to:

1. Transition from Dwell to Rise
2. Maximum Acceleration
3. Maximum Negative Acceleration
4. Maximum Displacement
5. Maximum Negative Acceleration
6. Maximum Acceleration
7. Transition from Fall to Dwell

These are repeated for travel over each lobe.

Figure 8B is a plot of the first derivative (velocity) of the function of Figure 8A.

$$dS/d\theta = V = {}^{h}/\beta\ [280\ (\theta/\beta)^4 - 840\ (\theta/\beta)^5 + 840\ (\theta/\beta)^7]$$

Where $\beta$ is the total angle of rise.

Points 1-7 correspond to:

1. Increase in Vertical Velocity
2. Rise-Maximum Increasing Velocity Slope
3. Rise Maximum Decreasing Velocity Slope
4. Zero Velocity
5. Fall-Maximum Increasing Velocity Slope
6. Fall Maximum Decreasing Velocity Slope
7. Back to Dwell Rest

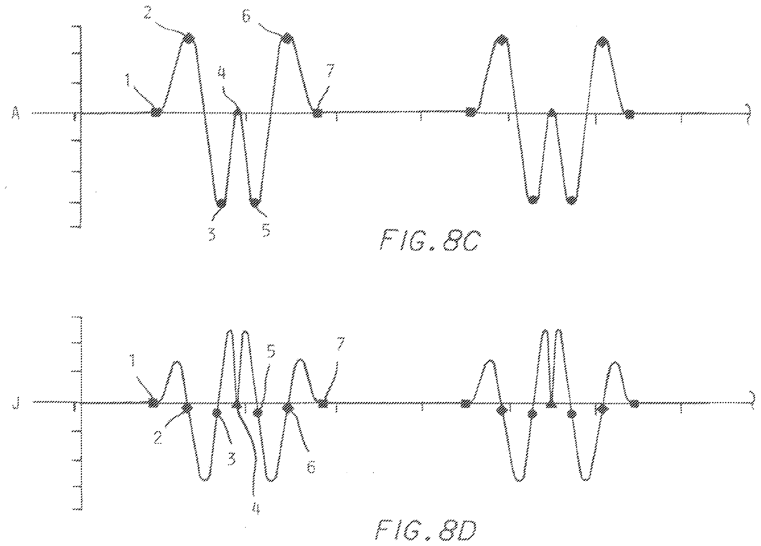

Figure 8C is a plot of the second derivative (acceleration) of the function of Figure 8A:

$$dV/d\theta = A = h/\beta^2\ [1120\ (\theta/\beta)^3 - 4200\ (\theta/\beta)^4 + 5040\ (\theta/\beta)^5 - 1960\ (\theta/\beta)^6]$$

It can be seen that while there are large changes in accelerations, there are no discontinuities or infinite values of accelerations.

Figure 8D is a plot of the third derivative (jerk) of the function of Figure 8A:

$$dA/d\theta = J = h/\beta^3\ [3360\ (\theta/\beta)^2 - 16800\ (\theta/\beta)^3 + 25200\ (\theta/\beta)^4 - 11760\ (\theta/\beta)^5]$$

It can be seen that again no discontinuities or very large or infinite values of jerk occur.

Thus, an engagement surface formed in conformity to a plot of an eight power polynomial function above will provide a torque limiter which can operate continuously in the released condition at high motor speeds without overstressing the parts leading to noise, and changing release torque levels, and complete failures.

Each particular application with a desired torque release set point and particulars as to the geometry of the various parts will reflect the actual dimensions of the curve of the engagement surface.

## Claims

**1.** A torque limiter arrangement (10) for interrupting a rotary drive between two rotary members (12, 14) rotating at high speeds by disconnecting the two members (12, 14) to overrun relative each other at a speed on the order of 1800 rpm or higher for extended time periods after the torque transmitted between said members (12, 14) exceeds a predetermined level, comprising:

a curving engagement surface (16) formed on one rotary member (12) extending around an axis of rotation of said one member (12) having a plurality of peaks each comprising a drive lobe (16A);
a plurality of engagement element assemblies (18) carried by another of said rotary members (14) each including an engagement element spring (26) urged into contact with said engagement surface (16) by a spring arrangement acting radially on said engagement element (20), producing an increasing resistance force as said engagement element (20) is caused to partially ascend a respective lobe (16A) by said relative rotation between said members (12, 14) caused by the transmission of torque therebetween any over a preset limit, torque applied by one of said rotary members (12, 14) below said preset limit being insufficient to overcome said spring arrangement and not causing said engagement element (20) to pass over said lobe (16A) and to thereby maintain a driving connection between said rotary members (12, 14); and, wherein whenever a transmitted torque increases over said preset limit causing said one or more follower elements (20) to be moved past and over said lobes (16A) whereby said rotary driving relationship between said rotary members (12, 14) is interrupted by said engagement elements (20) passing over said one or more lobes (16A) to disconnect said driving relationship between said members (12, 14) until said applied torque again declines below said preset limit to reset said torque limiter by again preventing said engagement elements (20) from rotating past an adjacent one or more lobe (16A) to thereby re-establish a rotary driving relationship between said rotary members (12, 14), said lobes (16A) of said engagement surface (16) of a curved shape insuring that discontinuities in a plot of the acceleration or jerk derivatives of the shape said lobes (16A) of said engagement surface (16) do not occur anywhere along said plot as said engagement elements (20) pass over said lobes (16A),
**characterized in that** each of said engagement surface peaks being defined at least in part by curved shape of a plot of a polynomial function of at least the fifth power, thereby minimizing dynamic forces imposed on said engagement elements (20) or engagement surface (16) when said torque limiter is operating in a rotary member disconnected condition.

2. The torque limiter according to claim 1 wherein said engagement surface lobes (16A) are defined at least in part in accordance with the curved shape of a plot of an eighth power polynomial function.

3. A method of interrupting the transmission of torque between a pair of rotary drive members (12, 14) rotating at high speeds on the order of 1800 rpm or higher for extended periods comprising:

interconnecting said members (12, 14) by a plurality of engagement elements (20) movably mounted on one of said members (12, 14) and applying an urging force tending to move said engagement elements (20) into engagement with an engagement surface (16) of revolution centered on an axis of rotation of said members (12, 14) formed on the other of said members (14, 12),
said engagement surface (16) formed with a series of curved lobes (16A) of increasing heights in the same direction as the direction of movement of said plurality of engagement elements (20) which cause an increase in the urging force exerted on said engagement elements (20) as said elements (20) each ascend a respective one of said lobes (16A) to cause said elements (20) to maintain a driving connection between said members (12, 14) as long as applied torque levels do not exceed a preset level necessary to overcome said urging force sufficiently to allow said engagement elements (20) to completely ascend and pass by said lobes (16A);
said transmission of torques interrupted when said applied torque levels exceed said preset levels,
**characterized by** configuring said engagement surface lobes (16A) to be shaped in accordance with a curved shape plot of a fifth or greater power polynomial function so as to not produce discontinuities in acceleration and/or jerk values when said lobes (16A) are overrun by said engagement elements (20).

4. The method according to claim 3 wherein said lobes (16A) are defined at least in part in accordance with the curved shape of a plot of a seventh or greater power polynomial function.

5. The method according to claim 3 wherein said lobes (16A) are defined at least in part in accordance with the curved shape of a plot of an eighth power polynomial

6. The method according to claim 3 including mounting said engagement rollers (20) comprising said engagement elements on said one member so as to be urged to engage said engagement surface (16).

7. The method according to claim 3 further including mounting each of said rollers (20) on a respective rocker arm (22) which are pivoted on said one of said members (14).


**Patentansprüche**

1. Drehmomentbegrenzeranordnung (10) zum Unterbrechen eines Drehantriebs zwischen zwei sich mit hohen Geschwindigkeiten drehenden Drehelementen (12, 14) durch Trennen der beiden Elemente (12, 14), damit sie relativ zueinander bei einer Geschwindigkeit in der Größenordnung von 1800 U/min oder höher für ausgedehnte Zeiträume im Freilauf sind, nachdem das zwischen den Elementen (12, 14) übertragene Drehmoment ein vorgegebenes Niveau überschritten hat, umfassend:

eine gebogene Eingriffsfläche (16), die an einem Drehelement (12) ausgebildet ist und sich um eine Drehachse des genannten einen Elements (12) erstreckt, das eine Vielzahl von Scheiteln hat, die jeweils einen Antriebsnocken (16A) umfassen;
eine Vielzahl von Eingriffselementanordnungen (18), die von einem anderen der Drehelemente (14) getragen werden und jeweils eine Eingriffselementfeder (26) einschließen, die durch eine Federanordnung, die radial auf das Eingriffselement (20) wirkt, in Kontakt mit der Eingriffsfläche (16) gezwungen wird, wobei eine zunehmende Widerstandskraft erzeugt wird, wenn das Eingriffselement (20) veranlasst wird, einen entsprechenden Nocken (16A) durch die relative Drehung zwischen den Elementen (12, 14), die durch die Übertragung eines Drehmomentes zwischen denselben über einer vorgegebenen Grenze verursacht wird, teilweise hinaufzulaufen, wobei das Drehmoment, das von einem der Drehelemente (12, 14) unter der vorgegebenen Grenze ausgeübt wird, unzureichend ist, um die Federanordnung zu überwinden, und nicht dazu führt, dass das Eingriffselement (20) über den Nocken (16A) hinweg läuft und dadurch eine Antriebsverbindung zwischen den Drehelementen (12, 14) aufrechterhält; und wobei immer, wenn ein übertragenes Drehmoment über die vorgegebene Grenze ansteigt, dies dazu führt, dass das eine oder mehr Mitnehmerelemente (20) an den Nocken (16A) vorbei und über dieselben hinweg laufen, wodurch die Drehantriebsbeziehung zwischen den Drehelementen (12, 14) unterbrochen wird, indem die Eingriffselemente (20) über den einen oder mehrere Nocken (16A) hinweg laufen, um die Antriebsbeziehung zwischen den Elementen (12, 14) zu trennen, bis das aufgebrachte Drehmoment erneut unter die vorgegebene Grenze sinkt, um den Drehmomentbegrenzer zurückzustellen, indem erneut verhindert wird, dass sich die Eingriffselemente(20) an einem angrenzenden oder mehreren Nocken (16A) vorbei drehen, um dadurch eine Drehantriebsbeziehung zwischen den Drehelementen (12, 14) erneut herzustellen, wobei die Nocken (16A) der Eingriffsfläche (16) mit einer gebogenen Form sicherstellen, dass Unterbrechungen in einem Diagramm der Beschleunigungs- oder Ruckableitungen der Form der Nocken (16A) der Eingriffsfläche (16) nirgends entlang des Diagramms auftreten, wenn die Eingriffselemente (20) über die Nocken (16A) hinweg laufen,

**dadurch gekennzeichnet, dass** jeder der Eingriffsflächenscheitel zumindest teilweise durch eine Kurvenform eines Diagramms einer Polynomfunktion mindestens des fünften Grades definiert ist, wodurch dynamische Kräfte, die auf die Eingriffselemente (20) oder die Eingriffsfläche (16) aufgebracht werden, minimiert werden, wenn der Drehmomentbegrenzer in einem Zustand getrennter Drehelemente arbeitet.

2. Drehmomentbegrenzer nach Anspruch 1, wobei die Eingriffsflächennocken (16A) zumindest teilweise gemäß der Kurvenform eines Diagramms einer Polynomfunktion achten Grades definiert sind.

3. Verfahren zum Unterbrechen der Drehmomentübertragung zwischen einem Paar von Drehantriebselementen (12, 14), die sich mit hohen Geschwindigkeiten in der Größenordnung von 1800 U/min oder höher für ausgedehnte Zeiträume drehen, umfassend:

Verbinden der Elemente (12, 14) durch eine Vielzahl von Eingriffselementen (20), die an einem der Elemente (12, 14) beweglich angebracht sind, und Ausüben einer Druckkraft, die dazu neigt, die Eingriffselemente (20) in Eingriff mit einer auf eine Drehachse der Elemente (12, 14) zentrierten Umdrehungs-Eingriffsfläche (16) zu bewegen, die an dem anderen der Elemente (14, 12) ausgebildet ist,
wobei die Eingriffsfläche (16) mit einer Reihe von gebogenen Nocken (16A) mit zunehmender Höhe in der gleichen Richtung wie die Bewegungsrichtung der Vielzahl von Eingriffselementen (20) geformt ist, die eine Zunahme der Druckkraft verursachen, die auf die Eingriffselemente (20) ausgeübt wird, wenn die Elemente (20) jeweils einen jeweiligen der Nocken (16A) hinauflaufen, um zu bewirken, dass die Elemente (20) eine Antriebsverbindung zwischen den Elementen (12, 14) aufrechterhalten, solange die aufgebrachten Drehmoment-Niveaus ein vorgegebenes Niveau nicht überschreiten, das notwendig ist, um die Druckkraft ausreichend zu überwinden, um zu ermöglichen, dass die Eingriffselemente (20) die Nocken (16A) vollständig hinauflaufen und an denselben vorbeilaufen;
wobei die Übertragung von Drehmomenten unterbrochen wird, wenn die aufgebrachten Drehmoment-Niveaus die vorgegebenen Niveaus überschreiten,
**gekennzeichnet durch** Konfigurieren der Eingriffsflächennocken (16A) derart, dass sie gemäß einem Kurvenform-Diagramm einer Polynomfunktion fünften oder höheren Grades geformt sind, so dass sie keine Unterbrechungen bei den Beschleunigungs- und/oder Ruckwerten erzeugen, wenn die Nocken (16A) von den Eingriffselementen (20) überlaufen werden.

4. Verfahren nach Anspruch 3, wobei die Nocken (16A) zumindest teilweise gemäß der Kurvenform eines Diagramms einer Polynomfunktion siebten oder höheren Grades definiert sind.

5. Verfahren nach Anspruch 3, wobei die Nocken (16A) zumindest teilweise gemäß der Kurvenform eines Diagramms einer Polynomfunktion achten Grades definiert sind.

6. Verfahren nach Anspruch 3, umfassend das Befestigen der Eingriffsrollen (20), die die genannten Eingriffselemente umfassen, an dem genannten einen Element, um so in Eingriff mit der Eingriffsfläche (16) gezwungen zu werden.

7. Verfahren nach Anspruch 3, ferner umfassend das Befestigen jeder der Rollen (20) an einem jeweiligen Kipphebel (22), die an dem einen der Elemente (14) drehbar gelagert sind.

**EP 2 864 672 B1**

**Revendications**

1. Agencement de limiteur de couple (10) permettant d'interrompre un entrainement rotatif entre deux éléments rotatifs (12, 14) qui tournent à des vitesses élevées en déconnectant les deux éléments (12, 14) pour qu'ils soient en roule libre l'un par rapport à l'autre à une vitesse de l'ordre de 1800 t/mn ou plus, pendant des périodes prolongées après que le couple transmis entre lesdits éléments (12, 14) ait dépassé un niveau prédéterminé, comprenant :

   une surface d'engagement incurvée (16) formée sur un élément rotatif (12) qui s'étend autour d'un axe de rotation dudit élément (12) ayant une pluralité de sommets, comprenant chacun un lobe d'entrainement (16A) ;
   une pluralité d'ensembles d'éléments d'engagement (18) portés par un autre desdits éléments rotatifs (14) comportant chacun un ressort d'élément d'engagement (26) poussé en contact avec ladite surface d'engagement (16) par un agencement de ressort qui agit radialement sur ledit élément d'engagement (20), en produisant une force de résistance qui augmente au fur et à mesure que ledit élément d'engagement (20) est poussé à faire l'ascension partielle d'un lobe (16A) respectif, du fait de ladite rotation relative entre lesdits éléments (12, 14) provoquée par la transmission du couple entre ceux-ci, au-delà d'une limite préétablie, le couple appliqué par l'un desdits éléments rotatifs (12, 14) en dessous de ladite limite préétablie étant insuffisant pour surmonter ledit agencement de ressort et ne pas faire que ledit élément d'engagement (20) passe par-dessus ledit lobe (16A) et maintienne ainsi une connexion d'entrainement entre lesdits éléments rotatifs (12, 14) ; et, dans lequel, lorsqu'un couple transmis augmente au-delà de ladite limite préétablie en provoquant le déplacement dudit un ou desdits plusieurs élément(s) suiveur(s) (20) au-delà et par-dessus lesdits lobes (16A), grâce à quoi ladite relation d'entrainement rotatif entre lesdits éléments rotatifs (12, 14) est interrompue par le fait que lesdits éléments d'engagement (20) passent par-dessus ledit ou lesdits plusieurs lobe(s) (16A) afin de déconnecter ladite relation d'entrainement entre lesdits éléments (12, 14) jusqu'à ce que ledit couple appliqué redescende à nouveau en dessous de ladite limite préétablie pour réinitialiser ledit limiteur de couple en empêchant à nouveau lesdits éléments d'engagement (20) de tourner au-delà de l'un ou des lobe(s) (16A) adjacent(s) afin de ré-établir ainsi une relation d'entrainement rotatif entre lesdits éléments rotatifs (12, 14), lesdits lobes (16A) de ladite surface d'engagement (16) d'une forme incurvée garantissant que des discontinuités dans un diagramme des dérivées d'accélération ou de suraccélération de la forme desdits lobes (16A) de ladite surface d'engagement (16) ne se produisent pas où que ce soit le long dudit diagramme, alors que lesdits éléments d'engagement (20) passent par-dessus lesdits lobes (16A),
   **caractérisé en ce que** chacun desdits sommets de la surface d'engagement est défini au moins en partie par la forme incurvée d'un diagramme d'une fonction polynomiale d'une puissance d'au moins cinq, en réduisant ainsi au minimum les forces dynamiques imposées sur lesdits éléments d'engagement (20) ou ladite surface d'engagement (16) lorsque ledit limiteur de couple est en fonctionnement dans un état déconnecté d'élément rotatif.

2. Limiteur de couple selon la revendication 1, dans lequel lesdits lobes (16A) de la surface d'engagement sont définis au moins en partie en fonction de la forme incurvée d'un diagramme d'une fonction polynomiale de puissance huit.

3. Procédé d'interruption de la transmission de couple entre une paire d'éléments rotatifs (12, 14) qui tournent à des vitesses élevées de l'ordre de 1800 t/mn ou plus pendant des périodes prolongées, comprenant :

   l'interconnexion desdits éléments (12, 14) par une pluralité d'éléments d'engagement (20) montés mobiles sur l'un desdits éléments (12, 14) et appliquant une force de poussée qui tend à déplacer lesdits éléments d'engagement (20) en engagement avec une surface d'engagement (16) de révolution centrée sur un axe de rotation desdits éléments (12, 14) formés sur l'autre desdits éléments (14, 12),
   ladite surface d'engagement (16) formée avec une série de lobes incurvés (16A) de hauteurs qui augmentent dans la même direction que la direction du mouvement de ladite pluralité des éléments d'engagement (20) qui provoquent une augmentation de la force de poussée exercée sur lesdits éléments d'engagement (20), au fur et à mesure que lesdits éléments (20) font l'ascension, chacun, de l'un, respectif, desdits lobes ((16A) pour faire que lesdits éléments (20) maintiennent une connexion d'entrainement entre lesdits éléments (12, 14) tant que les niveaux de couple appliqués ne sont pas supérieurs à un niveau préétabli requis pour surmonter ladite force de poussée suffisamment pour permettre aux dits éléments d'engagement (20) de faire l'ascension complète et de passer par lesdits lobes (16A) ;
   ladite transmission de couples interrompue lorsque lesdits niveaux de couple appliqués sont supérieurs auxdits niveaux préétablis,
   **caractérisé par** la configuration desdits lobes de surface d'engagement (16A) pour qu'ils aient une forme selon un diagramme de forme incurvée d'une fonction polynomiale de puissance cinq ou plus, de façon à ne pas

9

produire de discontinuité dans les valeurs de l'accélération et/ou de la suraccélération lorsque lesdits lobes (16A) sont mis en roue libre par lesdits éléments d'engagement (20).

4. Procédé selon la revendication 3, dans lequel lesdits lobes (16A) sont définis au moins en partie en fonction de la forme incurvée d'un diagramme d'une fonction polynomiale de puissance sept, ou plus.

5. Procédé selon la revendication 3, dans lequel lesdits lobes (16A) sont définis au moins en partie en fonction de la forme incurvée d'un diagramme d'une fonction polynomiale de puissance huit.

6. Procédé selon la revendication 3, comportant le montage desdits rouleaux d'engagement (20) comprenant lesdits éléments d'engagement sur ledit un élément de manière à être poussés pour s'engager sur ladite surface d'engagement (16).

7. Procédé selon la revendication 3, comportant en outre le montage de chacun des rouleaux (20) sur un bras oscillant (22) respectif, qui pivote sur ledit un desdits éléments (14).

FIG.1

FIG.2

FIG. 3A

FIG. 3B

FIG. 3C

FIG. 4A

FIG. 4B

FIG.5

FIG. 6

FIG. 7A

FIG.7B

FIG.7C

FIG. 8A

FIG. 8B

FIG. 8C

FIG. 8D

**EP 2 864 672 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2501648 A
- US 20090305794 A
- US 20090305794 A1